# EUROPÄISCHE PATENTSCHRIFT

(11) **EP 2 050 328 B1**
(45) Veröffentlichungstag und Bekanntmachung des Hinweises auf die Patenterteilung: **08.12.2010**
(21) Anmeldenummer: 08017343.8
(22) Anmeldetag: 02.10.2008
(51) Int. Cl.: A01D 46/26, B25D 17/04

(54) **Handgeführtes Arbeitsgerät**
Manually operated work device
Appareil de travail manuel

(30) Priorität: 18.10.2007 DE 102007049881
(43) Veröffentlichungstag der Anmeldung: 22.04.2009
(73) Patentinhaber: Andreas Stihl AG & Co. KG, 71336 Waiblingen (DE)
(72) Erfinder: Machens, Kai-Ulrich, Dr., 70193 Stuttgart (DE); Heinzelmann, Georg, 71522 Backnang (DE); Götzel, Arne, 71522 Backnang (DE); Schneider, Andreas, 71384 Weinstadt (DE); Menzel, Johannes, 73529 Rechberg (DE)
(74) Vertreter: Wasmuth, Rolf

(56) Entgegenhaltungen:
- EP-A- 1 020 107
- WO-A-2004/074707
- DE-A1- 19 503 526

## Beschreibung

Die Erfindung betrifft ein handgeführtes Arbeitsgerät der im Oberbegriff des Anspruchs 1 angegebenen Gattung.

Aus der DE 698 08 662 T2 ist ein Arbeitsgerät, nämlich ein Erntegerät mit einer hin- und hergehend angetriebenen Rüttelstange bekannt. Zum Führen des Arbeitsgeräts dient ein Handgriff, der über plattenförmige Verbindungselemente mit dem Gehäuse des Arbeitsgeräts verbunden ist. Der Griff ist in Längsrichtung der Rüttelstange ausgerichtet. Dadurch befindet sich die Hand des Bedieners immer parallel zur Rüttelstange. Das Erntegerät wird mit nur einer Hand geführt.

Es hat sich gezeigt, dass das Führen des Arbeitsgeräts mit nur einem parallel zur Rüttelstange ausgerichteten Handgriff in einigen Betriebszuständen ergonomisch nachteilig sein kann.

Die DE 195 03 526 A1 zeigt einen Bohr- und/oder Schlaghammer mit einem bügelförmigen Griff, der an einem Ende schwenkbar gelagert ist. Das andere Ende des bügelförmigen Griffs stützt sich über eine Dämpfungsfeder am Gehäuse ab. In einer anderen Ausführungsform ist der Griff über schwingungsdämpfendes Material am Gehäuse festgelegt.

Die WO 2004/074707 A1 zeigt ein handgeführtes Erntegerät mit einem Bügelgriff, der über mehrere Dämpfungselemente aus einem elastischen Material am Führungsrohr angebunden ist. Der Erfindung liegt die Aufgabe zugrunde, ein Erntegerät der gattungsgemäßen Art zu schaffen, das eine ergonomische Bedienung erlaubt.

Diese Aufgabe wird durch ein Arbeitsgerät mit den Merkmalen des Anspruchs 1 gelöst.

Der Bügelgriff erlaubt ein Führen des Arbeitsgeräts mit einer abweichenden Handhaltung. Insbesondere zum Verschwenken des Arbeitsgeräts ist ein Bügelgriff vorteilhaft. Dadurch, dass der Bügelgriff über eine Schwingungsdämpfungseinrichtung mit dem Gehäuse verbunden ist, kann die Schwingungsbelastung des Bedieners verringert werden.

Vorteilhaft umfasst die Schwingungsdämpfungseinrichtung mindestens ein Dämpfungselement, das aus einem elastischen Material besteht. Vorteilhaft besteht das Dämpfungselement aus einem Kunststoff, insbesondere aus geschäumtem Kunststoff oder aus Gummi. Ein Dämpfungselement aus Kunststoff ermöglicht eine weiche Anbindung des Bügelgriffs, so dass große Relativwege zwischen dem Bügelgriff und dem Gehäuse möglich sind. Dadurch können auch die bei einem Arbeitsgerät, wie einem Erntegerät im Betrieb entstehenden, hohen Vibrationen abgefangen werden.

Um in Längsrichtung des Antriebselements sehr große Relativbewegungen zwischen dem Bügelgriff und dem Gehäuse zuzulassen, ist vorgesehen, dass der Bügelgriff um eine Schwenkachse schwingungsgedämpft beweglich angeordnet ist, die quer zur Antriebsachse des Antriebselements liegt. Durch die Anordnung einer Schwenkachse, um die der Bügelgriff schwenkbar gelagert ist, lassen sich Relativwege zwischen dem bezogen auf die Schwenkachse radial außenliegenden Bereich des Bügelgriffs und dem Gehäuse von mehreren Zentimetern realisieren.

Vorteilhaft ist der Bügelgriff um die Schwenkachse in einem ersten Winkelbereich mit einer ersten Dämpfungswirkung und in einem zweiten Winkelbereich mit einer zweiten, insbesondere größeren Dämpfungswirkung beweglich. Dadurch lässt sich ein nichtlineares, insbesondere ein progressives Dämpfungsverhalten erreichen. Dadurch lässt sich eine gute Schwingungsentkopplung des Bügelgriffs von dem Gehäuse und ein gutes Führungsverhalten erreichen. Um eine große Relativbewegung in Richtung der Antriebsachse des Antriebselements zuzulassen, ist vorgesehen, dass das Dämpfungselement sich über mindestens eine erste Abstützung gegenüber dem Bügelgriff und über mindestens eine zweite Abstützung gegenüber dem Gehäuse abstützt, wobei die Abstützungen etwa radial zur Schwenkachse ausgerichtet sind. Die Schwingungsdämpfungseinrichtung dämpft damit die Schwenkbewegung des Bügelgriffs um die Schwenkachse. Um eine ausreichend große Relativbewegung zwischen Bügelgriff und Gehäuse zuzulassen, ist vorgesehen, dass benachbarte erste und zweite Abstützungen einen Winkel von etwa 30° bis etwa 90° einschließen. Der Winkel zwischen benachbarten Abstützungen gibt den maximalen Verschwenkwinkel des Bügelgriffs in dieser Richtung an.

Eine einfache konstruktive Gestaltung ergibt sich, wenn die Abstützungen in parallel und etwa radial zur Schwenkachse verlaufende Schlitze im Dämpfungselement ragen. Vorteilhaft weist das Dämpfungselement mindestens einen Innenschlitz auf, der von einem mittleren Bereich des Dämpfungselements etwa radial nach außen verläuft, wobei der Innenschlitz zur Außenseite des Dämpfungselements geschlossen ist. Zweckmäßig weist das Dämpfungselement mindestens einen Außenschlitz auf, der sich von der Außenseite des Dämpfungselements etwa radial nach innen erstreckt und zur Mitte des Dämpfungselements geschlossen ist. Dadurch, dass mindestens ein Schlitz in radialer Richtung geschlossen ist, wird auch eine Bewegung senkrecht zur Schwenkachse gedämpft. Vorteilhaft sind die Schlitze abwechselnd auf die Außenseite und zum Inneren des Dämpfungselements geschlossen ausgebildet. Die Gestaltung der Schlitze ermöglicht auch eine Dämpfung einer Bewegung des Bügelgriffs um die Antriebsachse des Antriebselements. Durch die geometrische Gestaltung der Schlitze ist der mögliche Relativweg in Schwenkrichtung um die Längsmittelachse der Rüttelstange gering und die Dämpfungswirkung in dieser Richtung hoch, so dass die Schwingungsdämpfungseinrichtung in dieser Richtung steif ausgebildet ist. Auch eine Torsion um eine Hochachse, die senkrecht zur Schwenkachse und senkrecht zur Antriebsachse des Antriebselements steht, ist möglich, jedoch ergibt sich aufgrund der Gestaltung des Dämpfungselements auch hier eine hohe Steifigkeit, so dass sich ein gutes Führungsverhalten ergibt.

Vorteilhaft sind die Abstützungen als Rippen ausgebildet. Insbesondere sind die mit dem Gehäuse verbundenen Rippen als Außenrippen und die mit dem Bügelgriff verbundenen Rippen als Innenrippen ausgebildet. Dabei erstrecken sich die Außenrippen in den Außenschlitzen und die Innenrippen in den Innenschlitzen. Vorteilhaft wechseln sich in Umfangsrichtung Außenrippen mit Innenrippen ab. Um in beide Richtungen die gleiche Auslenkung zu ermöglichen, sind die Abstände zwischen benachbarten Außenrippen und Innenrippen vorteilhaft gleich groß. Als besonders vorteilhaft wird eine Gestaltung mit vier Außenrippen und vier Innenrippen angesehen. Das Dämpfungselement ist dabei insbesondere unsymmetrisch zur Schwenkachse ausgebildet, um eine nichtlineare, insbesondere eine progressive Dämpfungswirkung zu erreichen.

Vorteilhaft dämpft das Dämpfungselement die Bewegung des Bügelgriffs gegenüber dem Gehäuse in Richtung der Schwenkachse. Das Dämpfungselement dämpft damit sowohl eine Schwenkbewegung um die Schwenkachse als auch eine Längsbewegung in Richtung der Schwenkachse. Vorteilhaft ist das Dämpfungselement in einer Aufnahme angeordnet, wobei die Tiefe der Aufnahme kleiner als die in Richtung der Schwenkachse gemessene Breite des Dämpfungselements ist. Die Differenz von Tiefe der Aufnahme und der Breite des Dämpfungselements gibt dabei den zulässigen Dämpfungsweg in dieser Richtung an. Insbesondere sind in der Aufnahme mehrere, vorteilhaft zwei oder vier Dämpfungselemente angeordnet. Jedes Dämpfungselement erstreckt sich dabei vorteilhaft über einen Teilwinkelbereich um die Schwenkachse. Durch das Unterteilen eines Dämpfungselements in mehrere in der Aufnahme angeordnete Dämpfungselemente ist die Herstellung der Dämpfungselemente vereinfacht.

Ein eigenständiger erfinderischer Gedanke betrifft die Gestaltung des Bügelgriffs. Es ist vorgesehen, dass der Bügelgriff zwei Endabschnitte aufweist, deren Längsmittelachen zueinander einen Abstand aufweisen. Durch diese Gestaltung des Bügelgriffs lassen sich Führungskräfte in Richtung der Antriebsachse des Antriebselements gut einleiten. Der Abstand besteht dabei vorteilhaft in Richtung der Antriebsachse des Antriebselements. Vorteilhaft verlaufen die Endabschnitte parallel zueinander und insbesondere in Richtung der Schwenkachse des Bügelgriffs.

Es ist vorgesehen, dass der Bügelgriff über eine Halterung mit dem Gehäuse des Arbeitsgeräts verbunden ist. Eine einfache Gestaltung ergibt sich, wenn die Halterung eine untere Gehäuseschale und zwei seitliche Gehäuseschalen aufweist, wobei an jeder seitlichen Gehäuseschale mindestens ein Dämpfungselement angeordnet ist. Die Gestaltung der Halterung aus mehreren Gehäuseschalen erlaubt eine einfache Montage und die Fertigung der Halterung in einem Spritzgussverfahren. Dadurch, dass an jeder seitlichen Gehäuseschale mindestens ein Dämpfungselement angeordnet ist, ergibt sich ein symmetrischer Aufbau und dadurch ein gutes, symmetrisches Führungsverhalten. Vorteilhaft sind die Endabschnitte des Bügelgriffs zwischen der unteren Gehäuseschale und mindestens einer seitlichen Gehäuseschale geklemmt gehalten. Vorteilhaft weist die Halterung einen Standfuß zum Absetzen des Arbeitsgeräts auf. Der Standfuß ist in die Halterung integriert, so dass für die Halterung keine zusätzlichen Bauteile benötigt werden. Der Aufbau des Arbeitsgeräts ist vereinfacht.

Vorteilhaft ist das Arbeitsgerät ein Erntegerät und das Antriebselement eine in Richtung ihrer Längsmittelachse hin- und hergehend angetriebene Rüttelstange. Bei einem Erntegerät mit hin- und hergehend angetriebener Rüttelstange treten im Betrieb große Bewegungen in Richtung der Längsmittelachse der Rüttelstange auf, die über das Dämpfungselement gut abgefangen werden können.

Ein Ausführungsbeispiel der Erfindung wird im Folgenden anhand der Zeichnung erläutert. Es zeigen:
- Fig. 1: eine schematische Seitenansicht eines Erntegeräts,
- Fig. 2: eine perspektivische Darstellung des Bereichs des Bügelgriffs des Erntegeräts,
- Fig. 3: eine Explosionsdarstellung des Bereichs des Bügelgriffs des Erntegeräts,
- Fig. 4: eine perspektivische Darstellung eines Dämpfungselements,
- Fig. 5: eine Draufsicht auf ein Dämpfungselement,
- Fig. 6: eine Schnittdarstellung eines Dämpfungs- elements in einer Aufnahme,
- Fig. 7 bis Fig. 9: Ausführungsbeispiele von Dämpfungselementen in einer Aufnahme in Schnittdarstellung.

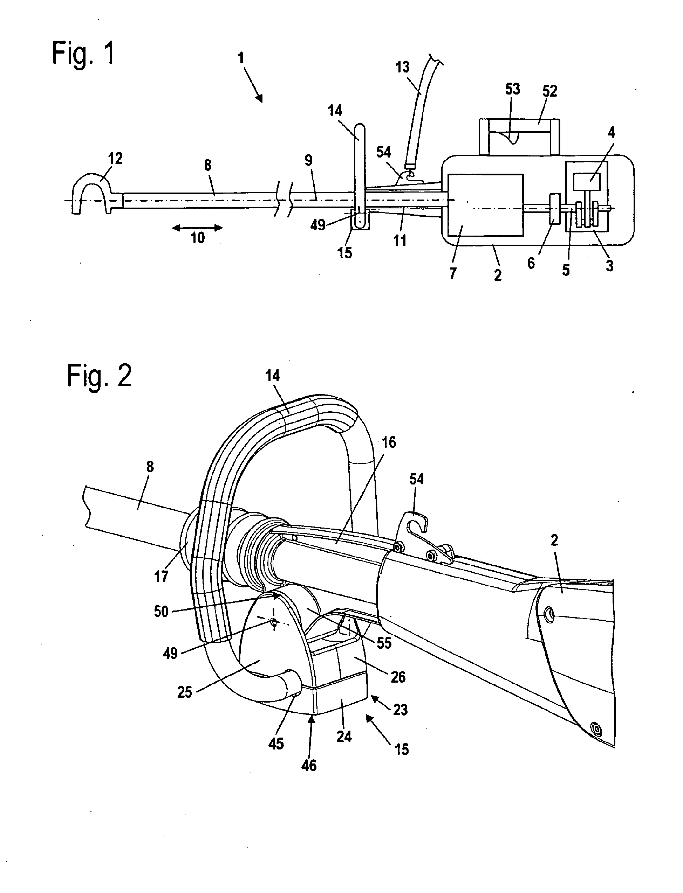

Das in Fig. 1 als Beispiel für ein Arbeitsgerät gezeigte Erntegerät 1 kann beispielsweise ein Olivenschüttler, ein Kaffeeernter oder dgl. sein. Ein erfindungsgemäßer Bügelgriff kann auch bei anderen Arbeitsgeräten mit hin- und hergehend angetriebenem Antriebselement wie beispielsweise bei Bohrhämmern oder dgl. vorteilhaft sein. Das Erntegerät 1 besitzt ein Gehäuse 2, in dem ein Antriebsmotor 3 angeordnet ist. Im Ausführungsbeispiel ist der Antriebsmotor 3 als Verbrennungsmotor ausgebildet. Der Antriebsmotor 3 ist insbesondere ein Zweitaktmotor oder ein gemischgeschmierter Viertaktmotor. Der Antriebsmotor 3 kann jedoch auch ein Elektromotor sein. Der im Ausführungsbeispiel als Verbrennungsmotor ausgeführte Antriebsmotor 3 besitzt einen Kolben 4, der eine Kurbelwelle 5 rotierend antreibt. Die Kurbelwelle 5 ist über eine Fliehkraftkupplung 6 mit einem Getriebe 7 verbunden, das die rotierende Bewegung der Kurbelwelle 5 in eine hin- und hergehende Bewegung umwandelt. Das Getriebe 7 treibt eine Rüttelstange 8 in Richtung einer Längsmittelachse 9 hin- und hergehend an. Die ist durch den Pfeil 10 angedeutet.

An dem dem Gehäuse 2 abgewandten Ende der Rüttelstange 8 ist ein Haken 12 zum Greifen von Ästen oder dgl. eines abzuerntenden Baums oder Strauchs angeordnet. Benachbart zum Gehäuse 2 ist die Rüttelstange 8 von einem Schutzrohr 11 umgeben. Das Schutzrohr 11 kann in das Gehäuse 2 integriert sein. Im Bereich des Schutzrohrs 11 ist am Gehäuse 2 ein Traghaken 54 festgelegt, in den ein Traggurt 13 eingehängt ist, mit dem das Erntegerät 1 über der Schulter vom Bediener getragen werden kann.

Zum Tragen und Führen des Erntegeräts 1 sind außerdem ein oberer Handgriff 52 und ein Bügelgriff 14 vorgesehen. Der Handgriff 52 ist am Gehäuse 2 festgelegt und weist einen Gashebel 53 zum Bedienen des Antriebsmotors 3 auf. Der Bügelgriff 14 ist auf der Höhe des dem Haken 12 zugewandten Bereichs des Schutzrohrs 11 angeordnet. Der Bügelgriff 14 ist über eine Halterung 15 mit dem Gehäuse 2 verbunden. Der Bügelgriff 14 ist um eine Schwenkachse 49 schwingungsgedämpft beweglich gelagert. Die Schwenkachse 49 liegt quer und im Ausführungsbeispiel senkrecht zur Längsmittelachse 9 der Rüttelstange 8.

Wie Fig. 2 zeigt, ist der Bügelgriff 14 an einem Gehäuseteil 16 festgelegt, das die Rüttelstange 8 umgibt. Bei der dem Haken 12 zugewandten Seite ist am Gehäuseteil 16 ein Faltenbalg 17 angeordnet, dessen eines, hinteres Ende mit dem Gehäuseteil 16 und dessen anderes, dem Haken 12 zugewandtes Ende mit der Rüttelstange 8 verbunden ist. Der Faltenbalg 17 ermöglicht die Relativbewegung zwischen Rüttelstange 8 und Gehäuseteil 16 und vermeidet gleichzeitig ein Eindringen von Schmutz ins Gehäuse 2.

Wie Fig. 2 auch zeigt, ist die Schwenkachse 49 auf der dem Traghaken 54 abgewandten, im Betrieb unten liegenden Seite der Rüttelstange 8 angeordnet. Der Bügelgriff 14 umschließt die Rüttelstange 8. Zwischen dem Gehäuseteil 16 und der Halterung 15 ist ein Anschlag 50 gebildet, der im Folgenden noch näher erläutert wird. Die Halterung 15 besitzt eine untere Gehäuseschale 24 sowie zwei seitliche Gehäuseschalen 25 und 26. Die Gehäuseschalen 24, 25 und 26 bilden ein Gehäuse 23 der Halterung 15, in das die Enden des Bügelgriffs 14 ragen. Die beiden seitlichen Gehäuseschalen 25 und 26 umgreifen einen Halterungsabschnitt 55 des Gehäuseteils 16. An der der Rüttelstange 8 abgewandten Seite der Halterung 15 ist ein Standfuß 46 ausgebildet, mit dem das Erntegerät 1 auf dem Boden abgestellt werden kann.

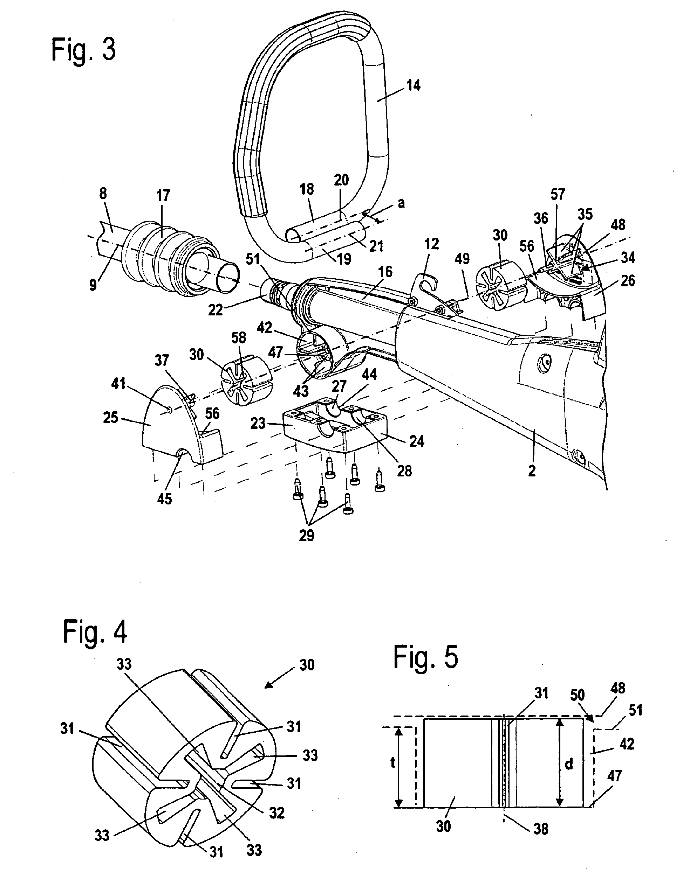

Fig. 3 zeigt den Aufbau des Erntegeräts 1 im Bereich des Bügelgriffs 14. Wie Fig. 3 zeigt, ist der Bügelgriff 14 als offener Ring ausgebildet. Der Bügelgriff 14 besitzt zwei Endabschnitte 18 und 19, die benachbart zueinander in einem geringen Abstand zueinander angeordnet sind. Der erste Endabschnitt 18 besitzt eine Längsmittelachse 20, die zu einer Längsmittelachse 21 des zweiten Endabschnitts 19 einen Abstand a besitzt. Der Abstand a kann beispielsweise etwa dem 1,1fachen bis 3fachen des Durchmessers der Endabschnitte 18, 19 entsprechen. Die Längsmittelachsen 20 und 21 der Endabschnitte 18 und 19 liegen senkrecht zur Längsmittelachse 9 der Rüttelstange 8 und parallel zur Schwenkachse 49 (Fig. 2). Der Abstand a ist in Richtung der Längsmittelachse 9 der Rüttelstange 8 gemessen. Senkrecht hierzu besitzen die Längsmittelachsen 20 und 21 keinen Abstand. In Richtung der Längsmittelachse 9 der Rüttelstange 8 gesehen liegen die Endabschnitte 18 und 19 hintereinander, so dass sich in Richtung der Längsmittelachse 9 gesehen ein geschlossener Ring ergibt.

Der Bügelgriff 14 ist über eine Schwingungsdämpfungseinrichtung mit dem Gehäuse 2 verbunden, die zwei Dämpfungselemente 30 umfasst. Am Gehäuseteil 16 sind im Halterungsabschnitt 55 zwei Aufnahmen 42 für jeweils ein Dämpfungselement 30 ausgebildet. Die beiden Aufnahmen 42, von denen in Fig. 3 nur die vorne liegende gezeigt ist, sind senkrecht zur Schwenkachse 49 und senkrecht zur Längsmittelachse 9 gesehen beidseitig der Längsmittelachse 9 angeordnet.

Die Halterung 15 besitzt eine Aufnahme 27 für den ersten Endabschnitt 18 und eine Aufnahme 28 für den zweiten Endabschnitt 19. Jeweils in der unteren Gehäuseschale 24 und einer seitlichen Gehäuseschale 25 und 26 ist eine Öffnung 44, 45 für einen Endabschnitt 18, 19 vorgesehen, durch die ein Endabschnitt 18, 19 ins Innere des Gehäuses 23 ragt. In der zweiten Gehäuseschale 26 ist eine Öffnung 44 für den ersten Endabschnitt 18 vorgesehen. Die Aufnahme 28 ist im Bereich der zweiten seitlichen Gehäuseschale 26 verschlossen. Auf der gegenüberliegenden Seite weist die erste seitliche Gehäuseschale 25 ebenso wie die untere Gehäuseschale 24 eine Öffnung 44 für den zweiten Endabschnitt 19 auf. Die Aufnahme 27 für den ersten Endabschnitt 18 ist auf dieser Seite der Halterung 15 verschlossen. Die Öffnungen sind jeweils zur Hälfte von der unteren Gehäuseschale 24 und den seitlichen Gehäuseschalen 25 und 26 begrenzt.

Wie Fig. 3 zeigt, ist die untere Gehäuseschale 24 mit den seitlichen Gehäuseschalen 25 und 26 von der dem Gehäuseteil 16 abgewandten Seite mit Schrauben 29 verschraubt. Die Endabschnitte 18, 19 sind in der Halterung 15 zwischen der Gehäuseschale 24 und den Gehäuseschalen 25 und 26 geklemmt gehalten. Der Bereich des Gehäuses 23 der Halterung 15, in dem die Endabschnitte 18 und 19 zu liegen kommen, ist durch an den seitlichen Gehäuseschalen 25 und 26 angeformte Gehäusewände 56 zum Gehäuseteil 16 des Gehäuses 2 des Erntegeräts 1 hin verschlossen. Die Gehäusewände 56 sind auf der dem Gehäuseteil 16 abgewandten Seite des Halterungsabschnitts 55 angeordnet. Seitlich des Halterungsabschnitts 55 besitzen die seitlichen Gehäuseschalen 25 und 26 jeweils eine Seitenwand 48, an der eine Innenführung 34, 37 angeformt ist. Wie am Beispiel der Innenführung 34 gezeigt ist, bestehen die Innenführungen 34, 37 aus vier Innenrippen 35, die sich von einem zentralen Zapfen 57 radial nach außen erstrecken. Die vier Innenrippen 35 sind jeweils um 90° um die Schwenkachse 49 zueinander versetzt angeordnet. Die Innenführung 37 ist ebenso ausgebildet.

Vom Zapfen 57 ragt ein Dorn 36 mit verringertem Durchmesser zur gegenüberliegenden ersten seitlichen Gehäuseschale 25. Die erste Gehäuseschale 25 besitzt eine Öffnung 41, in die der Dorn 36 bei montierter Halterung 15 ragt.

Die Innenführungen 34 und 37 ragen jeweils in eine Öffnung 58 in den Dämpfungselementen 30.

In den Halterungsabschnitten 55 ist jeweils eine Aufnahme 42 für ein Dämpfungselement 30 ausgebildet. Die Aufnahmen 42 besitzen Außenrippen 43, die von der Umfangswand der Aufnahme 42 radial nach innen ragen und die zueinander um 90° um die Schwenkachse 49 versetzt angeordnet sind. Jede Aufnahme 42 besitzt einen Boden 47, an dem das Dämpfungselement 30 anliegt. Die Aufnahme 42 besitzt einen den seitlichen Gehäuseschalen 25, 26 zugewandten Rand 51, der mit den Seitenwänden 48 der zugehörigen Gehäuseschalen 25, 26 den Anschlag 50 bildet.

Wie Fig. 3 zeigt, ist die Rüttelstange 8 geteilt ausgebildet. Der im Gehäuse 2 angeordnete Abschnitt der Rüttelstange 8 besitzt einen Anschlussstutzen 22, auf den der Abschnitt der Rüttelstange 8, der den Haken 12 trägt, aufgesteckt werden kann.

Die Figuren 4 und 5 zeigen den Aufbau der Dämpfungselemente 30. Die Dämpfungselemente 30 besitzen einen etwa zylindrischen Grundkörper, dessen Längsmittelachse 38 in montiertem Zustand mit der Schwenkachse 49 zusammenfällt. Jedes Dämpfungselement 30 besitzt vier vom Außenumfang radial nach innen ragende Außenschlitze 31. Die Schlitze 31 sind zur Öffnung 58 im Inneren des Dämpfungselements 30 durch einen Abschnitt des Dämpfungselements 30 verschlossen. Die Öffnung 58 ist durch eine mittige, zylindrische Öffnung 32 gebildet, die die Längsmittelachse 38 des Dämpfungselements 30 und in montiertem Zustand die Schwenkachse 49 umfasst und von der sich sternförmig vier etwa radial nach außen ragende Innenschlitze 33 erstrecken. Die Innenschlitze 33 enden vor dem Außenumfang 30, so dass die Innenschlitze 33 nach außen hin verschlossen sind.

Um auch eine Dämpfungswirkung in Richtung der Schwenkachse 49 zu erreichen, ist vorgesehen, dass die Tiefe t der Aufnahmen 42 kleiner als die Breite d der Dämpfungselemente 30 ist (Fig. 5). Dadurch können auch in Querrichtung zur Rüttelstange 8 Vibrationen gedämpft werden. Aufgrund der hohen Stabilität des Dämpfungselements 30 in Richtung der Schwenkachse 49 ergibt sich eine vergleichsweise steife Anbindung in dieser Richtung. Auch ein Schwenken des Bügelgriffs 14 um die Längsmittelachse 9 der Rüttelstange 8 oder um eine senkrecht zur Schwenkachse 49 und zur Längsmittelachse 9 stehende Schwenkachse ist möglich. Auch hier ergeben sich hohe Steifigkeiten. Die Querbewegung des Bügelgriffs 14 in Richtung der Schwenkachse 49 und die Schwenkbewegung des Bügelgriffs 14 um die Längsmittelachse 9 der Rüttelstange 8 wird durch Anschläge 50 begrenzt, die zwischen dem Rand 51 und der zugeordneten Seitenwand 48 der seitlichen Gehäuseschalen 25, 26 gebildet ist.

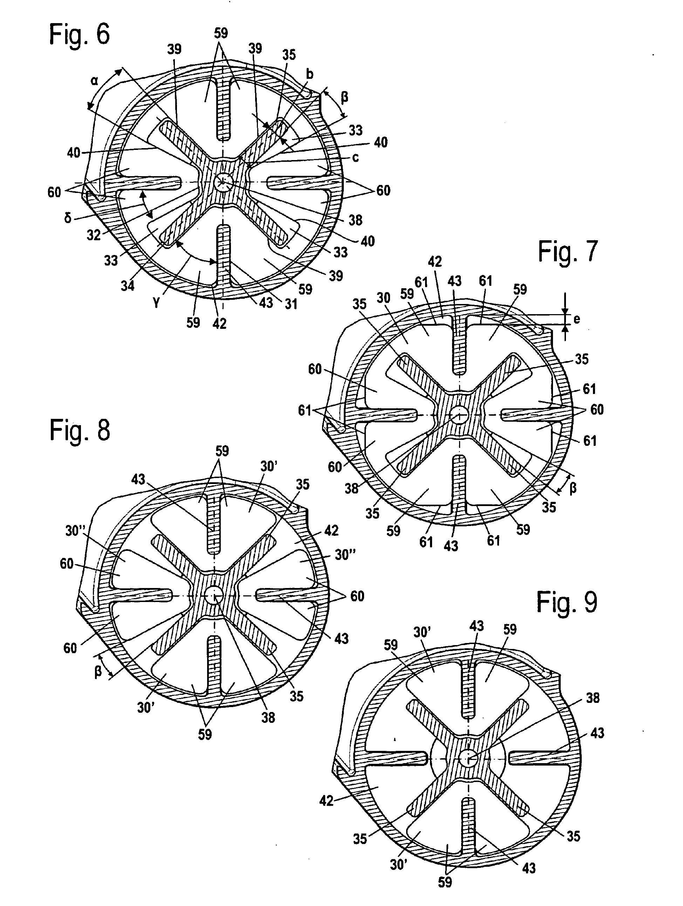

Wie Fig. 6 zeigt, besitzen die Innenschlitze 33 Seitenwände 39 und 40, die miteinander einen Winkel α einschließen. Die Schlitze 33 werden mit zunehmendem Abstand von der Längsmittelachse 38 breiter. Die Schlitze 33 besitzen an dem der Öffnung 32 zugewandten Ende eine Breite c, die größer als die Breite b der Innenrippen 35 ist. Die Innenrippen 35 liegen dabei jeweils an einer Wand 39 der Innenschlitze 33 an. Zu der gegenüberliegenden Seitenwand 40 besitzen die Innenrippen 35 einen Abstand, der sich in radialer Richtung nach außen vergrößert. Der sich ergebene Abstandswinkel β definiert den Winkelbereich, in dem das Dämpfungselement eine erste Dämpfungswirkung aufweist. Bei einer Schwenkbewegung um die Schwenkachse 49 liegen nur zwei Innenrippen 35 in Schwenkrichtung an Segmenten des Dämpfungselements 30 an, so dass nur zwei Segmente des Dämpfungselements 30 zur Dämpfungswirkung beitragen. Sobald die weiteren beiden Innenrippen 35 an den Seitenwänden 40 anliegen, ergibt sich eine zweite, größere Dämpfungswirkung, so dass eine progressive Dämpfungswirkung erzielt wird. Sobald die weiteren beiden Innenrippen 35 an den zugeordneten Segmenten des Dämpfungselements 30 anliegen, tragen vier Segmente zur Dämpfungswirkung bei. Um diese progressive Dämpfungswirkung in beiden Richtungen zu erreichen, besteht bei zwei einander gegenüberliegenden Innenrippen 35 der Abstandswinkel β zu der im Uhrzeigersinn folgenden Seitenwand 40. Bei den beiden anderen Innenrippen besteht der Abstandswinkel β zu einer Seitenwand 40, die im Gegenuhrzeigersinn zu den Innenrippen 35 liegt. Das Dämpfungselement 30 besitzt dadurch insgesamt vier Dämpfungsabschnitte 59, die an einer Außenrippe 43 und einer Innenrippe 35 anliegen und vier weitere Dämpfungsabschnitte 60, die jeweils an einer Außenrippe 43 anliegen und die zu einer benachbarten Innenrippe 35 den Abstandswinkel β aufweisen.

Wie Fig. 6 zeigt, wechseln sich Innenschlitze 33 und Außenschlitze 31 ab. Es sind vier Innenschlitze 33 und vier Außenschlitze 31 vorgesehen. Wie Fig. 6 zeigt, sind in den Außenschlitzen 31 die Außenrippen 43 angeordnet. Die Breite der Außenschlitze 31 entspricht annähernd der Breite der Außenrippen 43, so dass die Dämpfungselemente 30 in den Aufnahmen 42 im Wesentlichen drehfest gehalten sind. Benachbarte Innenrippen 35 und Außenrippen 43 besitzen einen Winkelabstand γ zueinander, der im Ausführungsbeispiel zwischen 40° und 45° beträgt. Als vorteilhaft wird ein Winkel γ von etwa 30° bis etwa 90° angesehen. Die Dämpfungsabschnitte 59 erstrecken sich dabei zwischen den beiden Rippen 35 und 43 jeweils über einen Winkel γ. Die Dämpfungsabschnitte 60 erstrecken sich über einen Winkel δ, der um den Winkel β kleiner als der Winkel γ ist.

Fig. 7 zeigt ein Ausführungsbeispiel für das Dämpfungselement 30, dessen Aufbau im Wesentlichen dem in Fig. 6 gezeigten Dämpfungselement 30 entspricht. Gleiche Bezugszeichen kennzeichnen gleiche Elemente. Wie Fig. 7 zeigt, besitzt das Dämpfungselement 30 aus Fig. 7 an seiner Außenseite insgesamt acht Abflachungen 61, die in Richtung der Längsmittelachse 38 und senkrecht zu den Außenrippen 43 verlaufen. Die Abflachungen 61 sind benachbart zu den Außenrippen 43 angeordnet. Bei einer Bewegung des Bügelgriffs 14 senkrecht zur Schwenkachse 49 ergibt sich aufgrund der Abflachungen 61 zunächst eine geringere Dämpfungswirkung. Sobald die Relativbewegung des Bügelgriffs 14 zum Gehäuse 2 einen Weg überschritten hat, der dem größten radialen Abstand e einer Abflachung 61 zur Aufnahme 42 entspricht, kommt das Dämpfungselement 30 auch im Bereich der Abflachungen 61 mit dem Rand der Aufnahme 42 in Kontakt, so dass nun die gesamte Breite des Dämpfungselements 30 zur Dämpfungswirkung beiträgt. Dadurch wird die Dämpfungswirkung erhöht. Es ergibt sich eine progressive Dämpfungskennlinie in den Richtungen senkrecht zur Schwenkachse 49.

Fig. 8 zeigt ein Ausführungsbeispiel, bei dem das Dämpfungselement 30 aus zwei Dämpfungselementen 30' und zwei Dämpfungselementen 30" aufgebaut ist. Die beiden Dämpfungselemente 30' umfassen jeweils zwei Dämpfungsabschnitte 59 und die beiden Dämpfungselemente 30" umfassen jeweils zwei Dämpfungsabschnitte 60. Demnach sind insgesamt vier Dämpfungselemente 30', 30" in der Aufnahme 42 angeordnet. Die Dämpfungsabschnitte 59 liegen jeweils zwischen einer Innenrippe 35 und einer Außenrippe 43 an, während die Dämpfungsabschnitte 60 zu den Innenrippen 35 einen Winkelabstand β aufweisen. In radialer Richtung ist zwischen den Innenrippen 35 und der Außenwand der Aufnahme 42 kein Dämpfungselement angeordnet. Jedes Dämpfungselement 30', 30" besitzt einen Außenschlitz 31, in den eine Außenrippe 34 ragt. Da die Außenschlitze 31 des Dämpfungselemente 30' und 30" radial nach innen geschlossen ausgebildet sind, wird verhindert, dass die Innenrippen 35 mit der Außenwand der Aufnahme 42 in Kontakt kommen können.

In Fig. 9 ist ein weiteres Ausführungsbeispiel gezeigt, bei dem lediglich zwei Dämpfungselemente 30' vorgesehen sind, die einander gegenüberliegend in der Aufnahmen 42 angeordnet sind. Die Dämpfungselemente 30' umfassen zwei Dämpfungsabschnitte 59, die jeweils an einer Innenrippe 35 und einer benachbarten Außenrippe 43 anliegen. Da lediglich zwei Dämpfungselemente 30' vorgesehen sind, wird eine geringere Dämpfungswirkung als beim Ausführungsbeispiel nach Fig. 8 erreicht. Die Dämpfungswirkung in der Verbindungsebene der beiden Dämpfungselemente 30' unterscheidet sich von der Dämpfungswirkung senkrecht hierzu. Es können auch eine andere Anzahl von Dämpfungselementen oder eine andere Gestalt der Dämpfungselemente vorteilhaft sein.

## Patentansprüche

1. Handgeführtes Arbeitsgerät mit einem Gehäuse (2), mit einem Antriebsmotor (3), der ein Antriebselement in Richtung einer Antriebsachse hin- und hergehend antreibt und mit mindestens einem Handgriff (14, 52) zum Führen des Arbeitsgerät im Betrieb,
wobei ein Handgriff als Bügelgriff (14) ausgebildet ist, der über eine Schwingungsdämpfungseinrichtung mit dem Gehäuse (2) verbunden ist, wobei der Bügelgriff (14) um eine Schwenkachse (49) schwingungsgedämpft beweglich angeordnet ist, wobei die Schwenkachse (49) quer zur Antriebsachse des Antriebselements liegt,
**dadurch gekennzeichnet, dass** das Dämpfungselement (30, 30', 30") sich über mindestens eine erste Abstützung gegenüber dem Bügelgriff (14) und über mindestens eine zweite Abstützung gegenüber dem Gehäuse (2) abstützt, wobei die Abstützungen etwa radial zur Schwenkachse (49) ausgerichtet sind, und wobei die Abstützungen in parallel und etwa radial zur Schwenkachse (49) verlaufende Schlitze (31, 33) im Dämpfungselement (30, 30', 30") ragen.

2. Arbeitsgerät nach Anspruch 1,
**dadurch gekennzeichnet, dass** die Schwingungsdämpfungseinrichtung mindestens ein Dämpfungselement (30, 30', 30") umfasst, das aus einem elastischen Material, vorzugsweise aus einem Kunststoff, insbesondere aus einem geschäumten Kunststoff oder aus Gummi besteht.

3. Arbeitsgerät nach Anspruch 1 oder 2,
**dadurch gekennzeichnet, dass**
der Bügelgriff (14) um die Schwenkachse (49) in einem ersten Winkelbereich (β) mit einer ersten Dämpfungswirkung und in einem zweiten Winkelbereich mit einer zweiten Dämpfungswirkung beweglich ist.

4. Arbeitsgerät nach Anspruch 1,
**dadurch gekennzeichnet, dass**
benachbarte erste und zweite Abstützungen einen Winkel (γ) von insbesondere etwa 30" bis etwa 90° einschließen.

5. Arbeitsgerät nach einem der Ansprüche 1 bis 4, **dadurch gekennzeichnet, dass**
das Dämpfungselement (30) mindestens einen Innenschlitz (33) aufweist, der von einem mittleren Bereich des Dämpfungselement (30) etwa radial nach außen verläuft, wobei der Innenschlitz (33) zur Außenseite des Dämpfungselements (30) insbesondere geschlossen ist.

6. Arbeitsgerät nach einem der Ansprüche 1 bis 5, **dadurch gekennzeichnet, dass** das Dämpfungselement mindestens einen Außenschlitz (31) aufweist, der sich von der Außenseite des Dämpfungselements (30, 30', 30") etwa radial nach innen erstreckt und zur Mitte des Dämpfungselements (30, 30', 30") geschlossen ist.

7. Arbeitsgerät nach einem der Ansprüche 1 bis 6,
**dadurch gekennzeichnet, dass** die Abstützungen als Rippen (35, 43) ausgebildet sind, wobei vorzugsweise die mit dem Gehäuse (2) verbundenen Rippen als Außenrippen (43) und vorzugsweise die mit dem Bügelgriff (14) verbundenen Rippen als Innenrippen (35) ausgebildet sind.

8. Arbeitsgerät nach einem der Ansprüche 1 bis 7,
**dadurch gekennzeichnet, dass** das Dämpfungselement (30, 30', 30") die Bewegung des Bügelgriffs (14) gegenüber dem Gehäuse (2) in Richtung der Schwenkachse (49) dämpft.

9. Arbeitsgerät nach einem der Ansprüche 1 bis 8,
**dadurch gekennzeichnet, dass** in der Wirkverbindung zwischen dem Gehäuse (2) und dem Bügelgriff (14) ein in Richtung der Schwenkachse (49) wirkender Anschlag (50) gebildet ist.

10. Arbeitsgerät nach einem der Ansprüche 1 bis 8,
**dadurch gekennzeichnet, dass** das Dämpfungselement (30, 30', 30") in einer Aufnahme (42) angeordnet ist, wobei die Tiefe (t) der Aufnahme (42) kleiner als die in Richtung der Schwenkachse (49) gemessene Breite (d) des Dämpfungselements (30) ist und in der Aufnahme (42) vorzugsweise mehrere Dämpfungselemente (30', 30") angeordnet sind.

11. Arbeitsgerät nach einem der Ansprüche 1 bis 10,
**dadurch gekennzeichnet, dass** der Bügelgriff (14) zwei Endabschnitte (18, 19) aufweist, deren Längsmittelachsen (20, 21) zueinander einen Abstand (a) aufweisen, wobei sich der Abstand (a) vorzugsweise in Richtung der Antriebsachse des Antriebselements erstreckt.

12. Arbeitsgerät nach Anspruch 11,
**dadurch gekennzeichnet, dass** die Endabschnitte (18, 19) parallel zueinander verlaufen.

13. Arbeitsgerät nach Anspruch 11 oder 12,
**dadurch gekennzeichnet, dass** die Endabschnitte (18, 19) in Richtung der Schwenkachse (49) des Bügelgriffs (14) verlaufen.

14. Arbeitsgerät nach einem der Ansprüche 1 bis 13,
**dadurch gekennzeichnet, dass** der Bügelgriff (14) über eine Halterung (15) mit dem Gehäuse (2) des Arbeitsgeräts verbunden ist, wobei die Halterung (15) vorzugsweise eine untere Gehäuseschale (24) und zwei seitliche Gehäuseschalen (25, 26) aufweist und insbesondere an jeder seitlichen Gehäuseschale (25, 26) mindestens ein Dämpfungselement (30) angeordnet ist, wobei vorzugsweise die Endabschnitte (18, 19) des Bügelgriffs (14) zwischen der unteren Gehäuseschale (24) und mindestens einer seitlichen Gehäuseschale (25, 26) geklemmt gehalten sind.

15. Arbeitsgerät nach Anspruch 14,
**dadurch gekennzeichnet, dass** die Halterung (15) einen Standfuß (46) zum Absetzen des Arbeitsgeräts aufweist.

16. Arbeitsgerät nach einem der Ansprüche 1 bis 15,
**dadurch gekennzeichnet, dass** das Arbeitsgerät ein Erntegerät (1) ist, und dass das Antriebselement eine in Richtung ihrer Längsmittelachse (9) hin- und hergehend angetriebene Rüttelstange (8) ist.

## Claims

1. Hand-guided working implement, comprising a housing (2), a drive motor (3) driving a drive element in a reciprocating motion in the direction of a drive axis and at least one handle (14, 52) for guiding the working implement in operation,
wherein a handle is designed as a bow-type handle (14) joined to the housing (2) by way of a vibration damping device, wherein the bow-type handle (14) is movably mounted about a pivot axis (49) in a vibration-damped manner, the pivot axis (49) extending at right angles to the drive axis of the drive element,
**characterised in that** the damping element (30, 30', 30") is supported by at least one first support against the bow-type handle (14) and by at least one second support against the housing (2), wherein the supports are oriented approximately radial to the pivot axis (49) and wherein the supports extend into slots (31, 32) in the damping element (30, 30', 30") which are parallel and approximately radial with respect to the pivot axis (49).

2. Working implement according to claim 1,
**characterised in that** the vibration damping device comprises at least one damping element (30, 30', 30") made of an elastic material, preferably of a plastic material, in particular of expanded plastic or rubber.

3. Working implement according to claim 1 or 2,
**characterised in that** the bow-type handle (14) is movable about the pivot axis (49) within a first angular range (β) with a first damping action and within a second angular range with a second damping action.

4. Working implement according to claim 1,
**characterised in that** adjacent first and second supports enclose an angle (γ) of approximately 30° to approximately 90°.

5. Working implement according to any of claims 1 to 4,
**characterised in that** the damping element (30) has at least one internal slot (33) extending from a central region of the damping element (30) approximately radially outwards, the internal slot (33) being in particular closed towards the outside of the damping element (30).

6. Working implement according to any of claims 1 to 5,
**characterised in that** the damping element (30) has at least one external slot (31) extending from the outside of the damping element (30, 30', 30") approximately radially inwards and being closed towards the centre of the damping element (30, 30', 30").

7. Working implement according to any of claims 1 to 6,
**characterised in that** the supports are designed as ribs (35, 43), the ribs joined to the housing (2) being preferably designed as external ribs (43) and the ribs joined to the bow-type handle (14) being preferably designed as internal ribs (35).

8. Working implement according to any of claims 1 to 7,
**characterised in that** the damping element (30, 30', 30") damps the movement of the bow-type handle (14) relative to the housing (2) in the direction of the pivot axis (49).

9. Working implement according to any of claims 1 to 8,
**characterised in that** a stop (50) acting in the direction of the pivot axis (49) is formed in the active connection between the housing (2) and the bow-type handle (14).

10. Working implement according to any of claims 1 to 8,
**characterised in that** the damping element (30, 30', 30") is accommodated in a location (42), wherein the depth (t) of the location (42) is less than the width (d) of the damping element (30) as measured in the direction of the pivot axis (49) and wherein a plurality of damping elements (30', 30") is preferably provided in the location (42).

11. Working implement according to any of claims 1 to 10,
**characterised in that** the bow-type handle (14) has two end sections (18, 19) the longitudinal central axes (20, 21) of which are spaced by a distance (a), the distance (a) preferably extending in the direction of the drive axis of the drive element.

12. Working implement according to claim 11,
**characterised in that** the end sections (18, 19) extend parallel to each other.

13. Working implement according to claim 11 or 12,
**characterised in that** the end sections (18, 19) extend in the direction of the pivot axis (49) of the bow-type handle (14).

14. Working implement according to any of claims 1 to 13,
**characterised in that** the bow-type handle (14) is joined to the housing (2) of the working implement by a holder (15), wherein the holder (15) preferably comprises a lower housing shell (24) and two lateral housing shells (25, 26) and wherein in particular at least one damping element (30) is fitted to each lateral housing shell (25, 26), the end sections (18, 19) of the bow-type handle (14) being preferably clamped between the lower housing shell (24) and at least one of the lateral housing shells (25, 26).

15. Working implement according to claim 14,
**characterised in that** the holder (15) has a base (46) for depositing the working implement.

16. Working implement according to any of claims 1 to 15,
**characterised in that** the working implement is a harvesting implement (1) and **in that** the drive element is a shaking rod driven in a reciprocating motion in the direction of its longitudinal central axis (9).

## Revendications

1. Machine tenue à la main comprenant un boîtier (2), un moteur d'entraînement (3) qui entraîne un élément d'entraînement suivant un mouvement alternatif dans le sens d'un axe d'entraînement, et au moins une poignée (14, 52) pour guider la machine, en fonctionnement, étant précisé qu'une poignée est conçue comme une poignée en U (14) qui est reliée au boîtier (2) par l'intermédiaire d'un amortisseur de vibrations, que la poignée en U (14) est disposée pour être mobile, avec un amortissement des vibrations, autour d'un axe de pivotement (49), et que l'axe de pivotement (49) est transversal par rapport à l'axe d'entraînement de l'élément d'entraînement,
**caractérisée en ce que** l'élément d'amortissement (30, 30', 30") est en appui par rapport à la poignée en U (14) par l'intermédiaire d'au moins un premier appui, et par rapport au boîtier (2) par l'intermédiaire d'au moins un second appui, les appuis étant orientés à peu près radialement par rapport à l'axe de pivotement (49), et entrant dans des fentes (31, 33) de l'élément d'amortissement (30, 30', 30") qui s'étendent parallèlement et à peu près radialement par rapport à l'axe de pivotement (49).

2. Machine selon la revendication 1,
**caractérisée en ce que** l'amortisseur de vibrations comprend au moins un élément d'amortissement (30, 30', 30") qui se compose d'un matériau élastique, de préférence d'une matière plastique, en particulier d'une matière plastique expansée, ou de caoutchouc.

3. Machine selon la revendication 1 ou 2,
**caractérisée en ce que** la poignée en U (14) est mobile autour de l'axe de pivotement (49) dans une première plage angulaire (β) avec un premier effet d'amortissement, et dans une seconde plage angulaire avec un second effet d'amortissement.

4. Machine selon la revendication 1,
**caractérisée en ce que** des premier et second appuis voisins définissent un angle (γ) d'environ 30° à environ 90°, en particulier.

5. Machine selon l'une des revendications 1 à 4,
**caractérisée en ce que** l'élément d'amortissement (30) présente au moins une fente intérieure (33) qui s'étend à peu près radialement vers l'extérieur à partir d'une zone centrale dudit élément d'amortissement (30), la fente intérieure (33) étant en particulier fermée vers le côté extérieur de l'élément d'amortissement (30).

6. Machine selon l'une des revendications 1 à 5,
**caractérisée en ce que** l'élément d'amortissement présente au moins une fente extérieure (31) qui s'étend à peu près radialement vers l'intérieur à partir du côté extérieur de l'élément d'amortissement (30, 30', 30") et qui est fermée vers le milieu de l'élément d'amortissement (30, 30', 30").

7. Machine selon l'une des revendications 1 à 6,
**caractérisée en ce que** les appuis sont conçus comme des ailettes (35, 43), les ailettes reliées au boîtier (2) étant de préférence conçues comme des ailettes extérieures (43), et les ailettes reliées à la poignée en U (14) étant de préférence conçues comme des ailettes intérieures (35).

8. Machine selon l'une des revendications 1 à 7,
**caractérisée en ce que** l'élément d'amortissement (30, 30', 30") amortit le mouvement de la poignée en U (14) par rapport au boîtier (2) dans le sens de l'axe de pivotement (49).

9. Machine selon l'une des revendications 1 à 8,
**caractérisée en ce que** dans la relation fonctionnelle entre le boîtier (2) et la poignée en U (14), une butée (50) agissant dans le sens de l'axe de pivotement (49) est formée.

10. Machine selon l'une des revendications 1 à 8,
**caractérisée en ce que** l'élément d'amortissement (30, 30', 30") est disposé dans un logement (42), la profondeur (t) du logement (42) étant inférieure à la largeur (d) de l'élément d'amortissement (30) mesurée dans le sens de l'axe de pivotement (49), et de préférence plusieurs éléments d'amortissement (30', 30") étant disposés dans le logement (42).

11. Machine selon l'une des revendications 1 à 10,
**caractérisée en ce que** la poignée en U (14) présente deux sections d'extrémité (18, 19) dont les axes longitudinaux médians (20, 21) présentent un écartement (a), l'écartement (a) s'étendant de préférence dans le sens de l'axe d'entraînement de l'élément d'entraînement.

12. Machine selon la revendication 11,
**caractérisée en ce que** les sections d'extrémité (18, 19) sont parallèles.

13. Machine selon la revendication 11 ou 12,
**caractérisée en ce que** les sections d'extrémité (18, 19) s'étendent dans le sens de l'axe de pivotement (49) de la poignée en U (14).

14. Machine selon l'une des revendications 1 à 13,
**caractérisée en ce que** la poignée en U (14) est reliée au boîtier (2) de la machine par l'intermédiaire d'une fixation (15), étant précisé que la fixation (15) présente de préférence une coque de boîtier inférieure (24) et deux coques de boîtier latérales (25, 26) et qu'au moins un élément d'amortissement (30) est disposé en particulier sur chaque coque de boîtier latérale (25, 26), et étant précisé que les sections d'extrémité (18, 19) de la poignée en U (14) sont de préférence fixées par serrage entre la coque de boîtier inférieure (24) et au moins une coque de boîtier latérale (25,26).

15. Machine selon la revendication 14,
**caractérisée en ce que** la fixation (15) présente un pied (46) pour poser la machine.

16. Machine selon l'une des revendications 1 à 15,
**caractérisée en ce qu'**elle consiste en une machine de récolte (1) et **en ce que** l'élément d'entraînement consiste en une perche de secouage (8) qui est entraînée suivant un mouvement alternatif dans le sens de son axe longitudinal médian (9).
